# EUROPÄISCHE PATENTSCHRIFT

(11) **EP 3 974 176 B1**
(45) Veröffentlichungstag und Bekanntmachung des Hinweises auf die Patenterteilung: **16.08.2023**
(21) Anmeldenummer: 20198094.3
(22) Anmeldetag: 24.09.2020
(51) Int. Cl.: B32B 7/12, B32B 27/30, B32B 27/32, C08L 33/12, C08L 83/04

(54) **VERSCHLEISSSCHUTZFOLIE FÜR DEKORPANEEL**
WEAR PROTECTION FILM FOR DECORATIVE PANEL
FEUILLE DE PROTECTION DE FERMETURE POUR PANNEAUX DÉCORATIFS

(43) Veröffentlichungstag der Anmeldung: 30.03.2022
(73) Patentinhaber: Akzenta Paneele + Profile GmbH, 56759 Kaisersesch (DE)
(72) Erfinder: Hüllenkremer, Felix, 56076 Koblenz (DE)
(74) Vertreter: Michalski Hüttermann & Partner Patentanwälte mbB

(56) Entgegenhaltungen:
- EP-A1- 3 632 700
- DATABASE WPI Week 201750 Thomson Scientific, London, GB; AN 2017-39797C XP002802268, & CN 106 752 128 A (GANSU LANMEI MACHINERY MFG CO LTD) 31. Mai 2017 (2017-05-31)

## Beschreibung

Die vorliegende Erfindung betrifft Verschleißschutzfolien und ein Verfahren zur Herstellung von Verschleißschutzfolien, sowie Dekorpaneele aufweisend eine Verschleißschutzfolien und ein Verfahren zur Herstellung von Dekorpaneelen aufweisend eine Verschleißschutzfolie.

Dekorpaneele mit Verschleißschutzschicht sind an sich bekannt und werden insbesondere als Paneele zur dekorativen Verkleidung von Böden, Wänden, Decken oder Türen verwendet. Unter dem Begriff Dekorpaneel sind im Sinne der Erfindung Wand-, Decken, Tür- oder Bodenpaneele zu verstehen, welche ein auf eine Trägerplatte aufgebrachtes Dekor aufweisen. Dekorpaneele werden dabei in vielfältiger Weise sowohl im Bereich des Innenausbaus von Räumen, als auch zur dekorativen Verkleidung von Bauten, beispielsweise im Messebau verwendet. Eine der häufigsten Einsatzbereiche von Dekorpaneelen ist deren Nutzung als Fußbodenbelag, zum Verkleiden von Decken, Wänden oder Türen. Die Dekorpaneele weisen dabei vielfach ein Dekor und eine Oberflächenstrukturierung auf, welche einen Naturwerkstoff imitieren soll.

Zum Schutz der aufgebrachten Dekorschicht sind in der Regel Verschleiß- oder Deckschichten oberhalb der Dekorschicht aufgebracht. Vielfach ist es vorgesehen, dass in solche Verschleiß- oder Deckschichten eine Dekorvorlage imitierende Oberflächenstrukturierung eingebracht ist, so dass die Oberfläche des Dekorpaneels eine haptisch wahrnehmbare Struktur aufweist, welche ihrer Form und ihrem Muster dem aufgebrachten Dekor angepasst ist, um so eine möglichst originalgetreue Nachbildung eines natürlichen Werkstoffes auch hinsichtlich der Haptik zu erhalten.

Als Verschleißschutzschichten für Dekorpaneele haben sich insbesondere Schichten aus duroplastischen Kunststoffen, wie beispielsweise Melaminharzen, durchgesetzt. Nachteilig an derartigen Verschleißschutzschichten kann es sein, dass sie insbesondere bei Anwendung auf Dekorpaneelen deren Rezyklierbarkeit verschlechtern. Weiterhin können Schichten aus duroplastischen Kunststoffen nur schlecht als Halbzeug hergestellt werden, wodurch sich Einschränkungen in der Prozessführung bei der Herstellung von Dekorpaneelen mit Verschleißschutzschicht ergeben.

Verschleißschutzschichten für Dekorpaneele und deren Herstellung können deswegen noch Verbesserungspotential bieten.

Dokument EP 3 632 700 A1 schlägt ein Verfahren zum Herstellen einer strukturierten Verschleißschutzfolie vor. Das Verfahren weist die Verfahrensschritte auf: Bereitstellen einer Verschleißschutzgrundfolie, Aufbringen einer formbaren lackhaltigen Deckschicht auf zumindest einen Teilbereich der Verschleißschutzgrundfolie, zumindest teilweises Strukturieren der lackhaltigen Deckschicht mit einem Digitaldruckverfahren zum Erzeugen einer Strukturierung der lackhaltigen Deckschicht und zumindest teilweises Härten der lackhaltigen Deckschicht. Es wird ferner eine strukturierte Verschleißschutzfolie, die Verwendung einer strukturierten Verschleißschutzfolie und ein Dekorpaneel mit strukturierter Verschleißschutzfolie vorgeschlagen. Zusammenfassend bietet das vorbeschriebene Verfahren den Vorteil, dass eine besonders detailgetreue Strukturierung einer Verschleißschutzoberfläche erhalten werden kann, dass sich die Struktur auf verschiedene Arten dabei besonders einfach relativ zu einem Dekor ausrichten lässt, dass eine wirtschaftliche Herstellung kleiner Serien ermöglicht wird und Einschränkungen in der Prozessführung reduziert werden.

Dokument CN 106 752 128 A offenbart eine lichtemittierende und reflektierende Sicherheitsfolie für Minenausrüstung und ein Verfahren zu ihrer Herstellung und gehört zum technischen Gebiet der Dünnschichtmaterialien. Die lichtemittierende und reflektierende Sicherheitsfolie umfasst eine Basisfolie, eine lichtemittierende Schicht, eine lichtreflektierende Schicht, eine lichtdurchlässige Schicht, eine Laminierschicht, eine Klebeschicht und dergleichen. Im Vergleich zum Stand der Technik hat die lichtemittierende und reflektierende Sicherheitsfolie die Vorteile, dass die lichtemittierende Schicht und die lichtreflektierende Schicht jeweils ein lichtemittierendes Mittel und ein lichtreflektierendes Mittel enthalten, die jeweils aus lichtemittierender Keramik und Keramikperlen hergestellt sind, so dass die Kompatibilität gut ist und die lichtemittierende und lichtreflektierende Wirkung gut ist; die abriebfesten, lichtbeständigen und feuchtigkeitsbeständigen Eigenschaften sind gut, sowie die lichtemittierenden und reflektierenden.

Es ist daher die Aufgabe der vorliegenden Erfindung, verbesserte Verschleißschutzschichten bereitzustellen, welche eine flexiblere Prozessführung bei der Herstellung von Dekorpaneelen mit Verschleißschutz und eine verbesserte Rezyklierbarkeit derartiger Paneele erlauben.

Gelöst wird diese Aufgabe durch eine Verschleißschutzfolie nach Anspruch 1, ein Dekorpaneel nach Anspruch 8, ein Verfahren zur Herstellung einer Verschleißschutzfolie nach Anspruch 13 und ein Verfahren zur Herstellung eines Dekorpaneels nach Anspruch 14. Bevorzugte Ausgestaltungen der Erfindung sind in den Unteransprüchen, in der Beschreibung oder in den Figuren angegeben, wobei weitere in den Unteransprüchen, in der Beschreibung oder in den Figuren beschriebene oder gezeigte Merkmale einzeln oder in einer beliebigen Kombination einen Gegenstand der Erfindung darstellen können, wenn sich aus dem Kontext nicht eindeutig das Gegenteil ergibt.

Mit der Erfindung wird eine Verschleißschutzfolie vorgeschlagen. Die Verschleißschutzfolie weist eine thermoplastische Trägerfolie und eine auf der thermoplastische Trägerfolie angeordnete Verschleißschutzschicht auf, wobei zwischen thermoplastischer Trägerfolie und Verschleißschutzschicht zumindest teilweise eine Haftvermittlerschicht angeordnet ist, wobei die thermoplastische Trägerfolie einen thermoplastischen Kunststoff aufweist, wobei die Haftvermittlerschicht einen Haftvermittler aufweist, und wobei die Verschleißschutzschicht eine Mischung aufweisend ein Polymethylmethacrylat und Polyorganosiloxan aufweist, wobei das Polyorganosiloxan ein zahlenmittleres Molekulargewicht in einem Bereich aufweist von größer oder gleich 50 kDa bis kleiner oder gleich 700 kDa, bevorzugt von größer oder gleich 100 kDa bis kleiner oder gleich 500kDa, weiter bevorzugt größer oder gleich 150 kDa bis kleiner oder gleich 300 kDa.

Es hat sich überraschender Weise gezeigt, dass sich durch die vorbeschriebene Verschleißschutzfolie gute Verschleißschutzeigenschaften von Dekorpaneelen erreichen lassen. Im Vergleich zu bekannten Verschleißschutzschichten ist die erfindungsgemäße Verschleißschutzfolie vorteilhaft als Halbzeug herstellbar ist, wodurch sich eine flexiblere Prozessführung bei der Herstellung von Dekorpaneelen ergibt. Zudem hat sich überraschender Weise gezeigt, dass die Verschleißschutzfolie in Verbindung mit Dekorpaneelen eine verbesserte Rezyklierbarkeit aufweist. Zugleich sind keine Beeinträchtigungen in Bezug auf die Optik von mit der erfindungsgemäßen Verschleißschutzfolie versehenen Dekorpaneelen zu erkennen.

Unter dem Begriff "Verschleißschutzfolie" ist dabei im Sinne der Erfindung eine Folie zu verstehen, die aufbringbar auf Dekorpaneele oder andere Werkstoffe sein kann und gegen Verschleiß, insbesondere gegen physische Einwirkung, schützt. Unter dem Begriff "Verschleißschutzschicht" ist entsprechend im Sinne der Erfindung eine Schicht zu verstehen, die gegen Verschleiß schützt.

Unter "thermoplastischen Kunststoffen" sind im Sinne der vorliegenden Erfindung Kunststoffe zu verstehen, die sich jeweils in einem bestimmten Temperaturbereich plastisch verformen lassen. Beispielsweise können Polyvinylchlorid, Polyolefine, wie beispielsweise Polyethylen (PE) oder Polypropylen (PP), Polyamide (PA), Polyurethane (PU), Polystyrol (PS), Acrylnitril-Butadien-Styrol (ABS), Polymethylmethacrylat (PMMA), Polycarbonat (PC), Polyethylenterephthalat (PET), Polyetheretherketon (PEEK) oder Mischungen oder Co-Polymerisate dieser thermoplastische Kunststoffe sein.

Unter einem "Haftvermittler" ist im Sinne der vorliegenden Erfindung eine Substanz zu verstehen, die dazu geeignet sind, eine bessere Verbindung zwischen zwei Materialien zu erzeugen, insbesondere die Haftung zwischen der Trägerfolie und der Verschleißschutzschicht.

Eine vorbeschriebene Verschleißschutzfolie kann demnach insbesondere eine bessere Rezyklierbarkeit von damit versehenen Dekorpaneelen und eine flexiblere Prozessführung bei deren Herstellung erlauben.

Im Detail weist die erfindungsgemäße Verschleißschutzfolie eine thermoplastische Trägerfolie auf. Die Trägerfolie weist einen thermoplastischen Kunststoff auf. Die Trägerfolie dient somit vorteilhafterweise als Träger für weiteren Schichten der Verschleißschutzfolie und kann insbesondere verhindern, dass diese ungewollt reißen. Die Trägerfolie kann außerdem als Verbindungsschicht bei einer späteren Herstellung eines Dekorpaneels dienen. Zudem kann die Trägerfolie eine einfache Handhabung der Verschleißschutzfolie erlauben. Beispielsweise kann die Verschleißschutzfolie durch die Trägerfolie aufrollbar sein, wodurch eine einfache Lagerung der Verschleißschutzfolie ermöglicht werden kann. Durch die thermoplastischen Eigenschaften der Trägerfolie können zudem Spannungen in einem Dekorpaneel aufweisend eine erfindungsgemäße Verschleißschutzfolie vermieden werden, da sich die thermoplastische Trägerfolie zumindest teilweise an Unebenheiten oder Zugspannungen in der Herstellung anpassen kann.

Auf der thermoplastischen Trägerfolie ist erfindungsgemäß eine Verschleißschutzschicht angeordnet. Die Verschleißschutzschicht weist eine Mischung aufweisend ein Polymethylmethacrylat und ein Polyorganosiloxan auf. Es konnte überraschenderweise gezeigt werden, dass durch die Mischung aufweisend Polymethylmethacrylat und Polyorganosiloxan gute Verschleißschutzeigenschaften erreicht werden können. Ohne an eine Theorie gebunden zu sein, wird davon ausgegangen, dass das Polyorganosiloxan in der Verschleißschutzschicht an die Oberfläche der Verschleißschutzfolie wandert und dort einen Bereich mit hoher Kratzfestigkeit ausbildet, der nicht abwischbar ist.

Die Verschleißschutzfolie weist zudem eine Haftvermittlerschicht auf, wobei die Haftvermittlerschicht einen Haftvermittler aufweist. Es konnte überraschenderweise gezeigt werden, dass durch eine derartige Haftvermittlerschicht die Verschleißschutzeigenschaften der Verschleißschutzschicht nicht beeinträchtigt werden und zugleich die Haftung zwischen der Verschleißschutzschicht und der thermoplastischen Trägerfolie verbessert wird. Dadurch kann erreicht werden, dass die Verschleißschutzschicht bei Beanspruchung nicht von der thermoplastischen Trägerfolie ungewollt abgelöst wird, wodurch die Verschleißschutzeigenschaften stark beeinträchtigt würden. Insbesondere kann dadurch erreicht werden, dass die Verschleißschutzschicht sich auch nicht beispielsweise beim Aufrollen und längerer Lagerung der Verschleißschutzfolie oder bei der Weiterverarbeitung der Verschleißschutzfolie von der thermoplastischen Trägerfolie löst.

Es konnte ferner überraschenderweise gezeigt werden, dass sich die Verschleißschutzfolie als Ganzes gut rezyklieren lässt, ohne dass eine mechanische Trennung der einzelnen Schichten notwendig ist. Somit ergeben sich durch die Zusammenwirkung der verschiedenen Schichten insgesamt die vorteilhaften Eigenschaften der erfindungsgemäßen Verschleißschutzfolie.

Bevorzugt kann vorgesehen sein, dass die thermoplastische Trägerfolie größer oder gleich 75 Gew.-% bezogen auf die thermoplastische Trägerfolie des thermoplastischen Kunststoffs aufweist, mehr bevorzugt größer oder gleich 90 Gew.-%, weiter bevorzugt größer oder gleich 95 Gew.-%, besonders bevorzugt größer oder gleich 99 Gew.-%.

Darunter ist zu verstehen, dass die thermoplastische Trägerfolie neben dem thermoplastischen Kunststoff auch andere Substanzen aufweisen kann, im Wesentlichen aber aus dem thermoplastischen Kunststoff besteht. Beispielsweise kann die thermoplastische Trägerfolie Zusatzstoffe aufweisen, die beispielsweise die Farbe, die Schlagzähigkeit oder auch Entflammbarkeit der Trägerfolie beeinflussen. Es hat sich gezeigt, dass in den angegebenen Bereichen die vorteilhaften Rezyklierungseigenschaften und Trägereigenschaften der thermoplastischen Trägerfolie besonders gut ausgeprägt sind. Insbesondere ergibt sich jedoch durch die Verwendung des erfindungsgemäßen Aufbaus ein Dekorpaneel, welches insgesamt besonders vorteilhaft rezyklierbar ist.

Bevorzugt kann vorgesehen sein, dass die Haftvermittlerschicht größer oder gleich 75 Gew.-% bezogen auf die Haftvermittlerschicht des Haftvermittlers aufweist, mehr bevorzugt größer oder gleich 90 Gew.-%, weiter bevorzugt größer oder gleich 95 Gew.-%, besonders bevorzugt größer oder gleich 99 Gew.-%.

Darunter ist zu verstehen, dass die Haftvermittlerschicht im Wesentlichen aus Haftvermittler besteht, aber noch andere Substanzen aufweisen kann. Beispielsweise kann vorgesehen sein, dass der Haftvermittler in einem Kunststoff verdünnt bzw. dispergiert vorliegt. Dadurch kann beispielsweise erreicht werden, dass der Haftvermittler bei der Herstellung der Verschleißschutzfolie gut verarbeitbar ist und einfach und dünn auf die thermoplastische Trägerfolie aufgetragen werden kann. In den vorgenannten Bereichen sind die durch die Haftvermittlerschicht erreichten Vorteile besonders ausgeprägt.

Bevorzugt kann vorgesehen sein, dass die Verschleißschutzschicht größer oder gleich 75 Gew.-% bezogen auf die Verschleißschutzschicht der Mischung aufweisend Polymethylmethacrylat und Polyorganosiloxan aufweist, mehr bevorzugt größer oder gleich 90 Gew.-%, weiter bevorzugt größer oder gleich 95 Gew.-%, besonders bevorzugt größer oder gleich 99 Gew.-%.

Darunter ist zu verstehen, dass die Verschleißschutzschicht neben Polymethylmethacrylat und Polyorganosiloxan noch andere Substanzen aufweisen kann, im Wesentlichen jedoch aus Polymethylmethacrylat und Polyorganosiloxan besteht. Es konnte gezeigt werden, dass in dem Bereich entsprechend andere Substanzen der Verschleißschutzschicht zugesetzt werden können, die beispielsweise die Schlagzähigkeit, die Entflammbarkeit oder die optischen Eigenschaften der Verschleißschutzschicht vorteilhaft verändern. In den vorgenannten Bereichen weist die Verschleißschutzschicht dabei besonders gute Verschleißschutzeigenschaften auf.

Bevorzugt kann vorgesehen sein, dass der thermoplastische Kunststoff ausgewählt ist aus der Gruppe bestehend aus Polypropylen, Polyvinylchlorid, Polyethylen, Copolymeren davon und Mischungen davon, wobei der thermoplastische Kunststoff insbesondere Polypropylen ist. Gemäß einer weiter bevorzugten Ausgestaltung der Erfindung weist das Polypropylen einen Melt Flow Index (MFI) in einem Bereich zwischen größer gleich 2 g/10min und kleiner gleich 20 g/10min, insbesondere zwischen größer gleich 5 g/10min und kleiner gleich 19 g/10min auf. Der Melt Flow Index kann dabei gemäß ISO 1133 bestimmt werden. Gemäß einer weiter bevorzugten Ausgestaltung ist das Polypropylen ein nukleiertes Homopolymer mit hoher Transparenz oder ein rondomisiertes Copolymer mit hoher Transparenz.

Durch die vorgenannten thermoplastischen Kunststoffe kann erreicht werden, dass die Verschleißschutzfolie besonders gut rezyklierbar ist. Zudem kann dadurch erreicht werden, dass die Verschleißschutzfolie besonders stabil ist. Es hat sich überraschenderweise gezeigt, dass mit den vorgenannten thermoplastischen Kunststoffen die thermoplastische Trägerfolie besonders dünn ausgestaltet sein kann, ohne dass die mechanischen Eigenschaften der Verschleißschutzfolie zu stark beeinträchtigt werden. Ohne an eine Theorie gebunden zu sein, wird davon ausgegangen, dass diese thermoplastischen Kunststoffe, und insbesondere Polypropylen, besonders kompatibel sind mit der Zusammensetzung der Verschleißschutzschicht.

Bevorzugt kann vorgesehen sein, dass der Haftvermittler ein Polyolefin-Copolymer ist, bevorzugt ein Polyolefin-Pfropfcopolymer, besonders bevorzugt ein Polypropylen-Pfropfcopolymer, insbesondere ein maleinsäureanhydridmodifiziertes Polypropylen-Pfropfcopolymer, ein Acrylsäure modifiziertes Polypropylen oder Polyethylen, ein Maleinsäureanhydrid modifiziertes Polyethylen, ein Metallocen katalysiertes lineares Polyethylen niedriger Dichte (Metallocen LLDPE), ein Metallocen katalysiertes lineares Polyethylen hoher Dichte (Metallocen HDPE) oder ein Ethylen-Vinylacetat-Copolymer.

Dadurch kann erreicht werden, dass die Haftung zwischen Verschleißschutzschicht und thermoplastischer Trägerfolie besonders stark ist. Überraschenderweise konnte gezeigt werden, dass sich insbesondere maleinsäureanhydridmodifiziertes Polypropylen-Pfropfcopolymer besonders gut eignet die Haftung zu verbessern, auch wenn die Verschleißschutzschicht einen hohen Anteil an Polyorganosiloxan aufweist.

Bevorzugt kann vorgesehen sein, dass das maleinsäureanhydridmodifizierte Polypropylen-Pfropfcopolymer einen Maleinsäureanteil in einem Bereich von größer oder gleich 0,1 Gew.-% bis kleiner oder gleich 5 Gew.-% aufweist, bezogen auf das maleinsäureanhydridmodifizierte Polypropylen-Pfropfcopolymer, bevorzugt von größer oder gleich 0,5 Gew.-% bis kleiner oder gleich 1,5 Gew.-%.

In den angegebenen Bereichen kann in vorteilhafter Weise eine besonders starke und langlebige Haftung zwischen der thermoplastischen Trägerfolie und der Verschleißschutzfolie erreicht werden.

Bevorzugt kann vorgesehen sein, dass das Polymethylmethacrylat einen Schlagzähigkeitsmodifikator aufweist, insbesondere in einer Menge in einem Bereich von größer oder gleich größer oder gleich 0,1 Gew.-% bis kleiner oder gleich 5 Gew.-% aufweist, bezogen auf das Polymethylmethacrylat, bevorzugt von größer oder gleich 0,5 Gew.-% bis kleiner oder gleich 1,5 Gew.-%. Gemäß einer weiter bevorzugten Ausgestaltung ist dabei der Schlagzähigkeitsmodifikator wenigstens eine Verbindung ausgewählt aus der Gruppe bestehend aus thermoplastischen Elastomeren, Ethylenglycoldimethacrylat, Ethylen-Butylacrylat, Ethylen-Methylacrylat-Copolymer und Polybutylacrylat.

Es konnte überraschenderweise gezeigt werden, dass sich damit die Schlagzähigkeit der Verschleißschutzschicht verbessern ließ, ohne die Verschleißeigenschaften, wie beispielsweise die Kratzfestigkeit, zu verschlechtern.

Bevorzugt kann vorgesehen sein, dass das Polyorganosiloxan ein Polydimethylsiloxan ist.

Polydimethylsiloxan kann sicher im Vergleich zu anderen Polyorganosiloxanen besonders gut in Polymethylmethacrylat lösen. Dadurch kann eine besonders stabile Verschleißschutzschicht erreicht werden. Ferner beeinträchtigt Polydimethylsiloxan die optischen Eigenschaften der Verschleißschutzschicht in vorteilhafter Weise besonders wenig.

Erfindungsgemäß ist vorgesehen, dass das Polyorganosiloxan ein zahlenmittleres Molekulargewicht in einem Bereich aufweist von größer oder gleich 50 kDa bis kleiner oder gleich 700 kDa, bevorzugt von größer oder gleich 100 kDa bis kleiner oder gleich 500kDa, weiter bevorzugt größer oder gleich 150 kDa bis kleiner oder gleich 300 kDa.

Unter "zahlenmittlerem Molekulargewicht" ist im Sinne der vorliegenden Erfindung der Mittelwert des Molekulargewichtes des entsprechenden Polymers zu verstehen, wobei über die relative Anzahl der Polymere mit entsprechendem Molekulargewicht gemittelt wurde. In anderen Worten gibt das zahlenmittlere Molekulargewicht die zu erwartende Molmasse eines zufällig aus der Probe entnommenen Polymermoleküls an.

Es hat sich gezeigt, dass Polyorganosiloxane mit dem angegebenen Molekulargewicht sich besonders gut zur Erzeugung einer Verschleißschutzschicht mit besonders guten Verschleißschutzeigenschaften eignen.

Besonders bevorzugt kann vorgesehen sein, dass das Polyorganosiloxan Polydimethylsiloxan mit einem zahlenmittleren Molekulargewicht in einem Bereich von größer oder gleich 100 kDa bis kleiner oder gleich 300 kDa ist.

Dadurch können ganz besonders vorteilhafte Verschleißeigenschaften erreicht werden und zugleich eine besonders hohe Transparenz der Verschleißschutzschicht beibehalten werden.

Bevorzugt kann vorgesehen sein, dass die Mischung aufweisend Polymethylmethacrylat und Polyorganosiloxan Polymethylmethacrylat aufweist in einem Bereich von größer oder gleich 90 Gew.-% bis kleiner 100 Gew.-% bezogen auf die Mischung, bevorzugt größer oder gleich 95 Gew.-% bis kleiner oder gleich 99,9 Gew.-%, weiter bevorzugt größer oder gleich 98 Gew.-% bis kleiner oder gleich 99,5 Gew.-%, besonders bevorzugt größer oder gleich 98,5 Gew.-% bis kleiner oder gleich 99 Gew.-%,
wobei die Mischung aufweisend Polymethylmethacrylat und Polyorganosiloxan Polyorganosiloxan aufweist in einem Bereich von größer 0 Gew.-% bis kleiner oder gleich 10 Gew.-% bezogen auf die Mischung, bevorzugt größer oder gleich 0,1 Gew.-% bis kleiner oder gleich 5 Gew.-%, weiter bevorzugt größer oder gleich 0,5 Gew.-% bis kleiner oder gleich 2 Gew.-%, besonders bevorzugt größer oder gleich 1 Gew.-% bis kleiner oder gleich 1,5 Gew.-%.

In den angegebenen Bereichen lassen sich in vorteilhafter Weise gute Verschleißeigenschaften erreichen und zugleich lässt sich eine gute Verarbeitbarkeit der Verschleißschutzschicht und eine gute Haftung an die thermoplastische Trägerfolie beibehalten.

Bevorzugt kann vorgesehen sein, dass die thermoplastische Trägerfolie eine Dicke aufweist in einem Bereich von größer oder gleich 0,1 mm bis kleiner oder gleich 1 mm, bevorzugt von größer oder gleich 0,2 mm bis kleiner oder gleich 0,8 mm, weiter bevorzugt von größer oder gleich 0,3 mm bis kleiner oder gleich 0,6 mm.

Dadurch kann erreicht werden, dass die Trägerfolie eine besonders gute Stabilität aufweist. Insbesondere kann dadurch erreicht werden, dass die thermoplastische Trägerfolie bei einer weiteren Verarbeitung oder bei einem Aufrollen für die Lagerung nur schlecht reißt. Zudem kann dadurch erreicht werden, dass die Trägerfolie eine ausreichende Dicke aufweist um bei der Verwendung in einem Dekorpaneel Spannungen zwischen dem Paneel und der Verschleißschutzschicht auszugleichen.

Bevorzugt kann vorgesehen sein, dass die Haftvermittlerschicht eine Dicke aufweist in einem Bereich von größer oder gleich 1 µm bis kleiner oder gleich 0,1 mm.

Dadurch kann eine besonders gute Haftung erreicht werden.

Bevorzugt kann vorgesehen sein, dass die Verschleißschutzschicht eine Dicke aufweist in einem Bereich von größer oder gleich 0,01 mm bis kleiner oder gleich 1 mm, bevorzugt von größer oder gleich 0,1 mm bis kleiner oder gleich 0,8 mm, weiter bevorzugt von größer oder gleich 0,4 mm bis kleiner oder gleich 0,6 mm. Insbesondere kann es vorteilhafter Weise vorgesehen sein, dass die Dicke der Verschleißschutzschicht größer oder gleich 5% bis kleiner oder gleich 30% der Gesamtdicke des erfindungsgemäßen Folienaufbaus aus Verschleißschicht, Haftvermittlungsschicht und Trägerfolie beträgt.

Dadurch kann erreicht werden, dass das Polyorganosiloxan eine Schicht mit besonders vorteilhafter Dicke an der Oberfläche der Verschleißschutzfolie ausbildet. Somit kann ein besonders guter und insbesondere langlebige Verschleißschutz erreicht werden.

Bevorzugt kann vorgesehen sein, dass die Verschleißschutzfolie eine bahnartige Form aufweist.

Unter einer "bahnartigen Form" kann dabei im Sinne der vorliegenden Erfindung eine Form verstanden werden, die im Vergleich zu seiner Dicke eine deutlich größere Breite und im Vergleich zu seiner Breite eine deutlich größere Länge, beispielswese größer als 15 Meter, aufweist.

Dadurch kann die Verschleißschutzfolie besonders gut zur Herstellung von Dekorpaneelen verwendet werden. Insbesondere kann die Verschleißschutzfolie somit einfach auf Rollen aufgerollt und gelagert werden und zu einem späteren Zeitpunkt zur Herstellung von Dekorpaneelen verwendet werden. Zudem kann eine bahnartige Form kontinuierlich herstellbar sein. Eine Verschleißschutzfolie mit bahnartiger Form kann entsprechend zeitgleich mit anderen Komponenten eines Dekorpaneels hergestellt werden und leicht beispielsweise über Rollen kontinuierlich mit diesen Komponenten zusammengebracht werden.

Bevorzugt kann vorgesehen sein, dass die Verschleißschutzschicht zumindest teilweise eine Oberflächenstrukturierung aufweist.

Dadurch kann vorteilhafterweise ein angenehmer haptischer Eindruck der Oberfläche der Verschleißschutzfolie erreicht werden.

Bevorzugt kann vorgesehen sein, dass die Oberflächenstrukturierung angepasst ist, um eine möglichst originalgetreue Nachbildung eines natürlichen Werkstoffes hinsichtlich der Haptik zu erhalten

Bevorzugt kann vorgesehen sein, dass die Verschleißschutzschicht eine an der Oberfläche der Verschleißschutzfolie angeordnete lackhaltige Deckschicht aufweist, wobei die lackhaltige Deckschicht vorzugsweise einen Decklack aufweist ausgewählt aus der Gruppe bestehend aus Melaminharz und acrylatbasierten Kunststoffzusammensetzungen, insbesondere aus polyurethanmodifizierten Acrylat-Kunststoffzusammensetzungen.

Dadurch kann vorteilhafterweise erreicht werden, dass die Verschleißschutzeigenschaften weiter verbessert werden. Im Vergleich zu Verschleißschutzschichten, die nur einen lackhaltige Deckschicht aufweisen und keine Verschleißschutzschicht aufweisend Polymethylmethacrylat und Polyorganosiloxan kann eine derartige weitere Verbesserung der Verschleißschutzeigenschaften dabei schon mit einer besonders dünnen lackhaltigen Deckschicht erreicht werden, wodurch sich die Rezyklierbarkeit besonders wenig verschlechtert.

Mit der Erfindung wird ferner ein Dekorpaneel vorgeschlagen. Das Dekorpaneel weist eine Trägerplatte, zumindest eine Dekorschicht, zumindest eine Kaschierklebstoffschicht und eine erfindungsgemäße Verschleißschutzfolie auf, wobei die Verschleißschutzfolie trägerfolienseitig zur Trägerplatte ausgerichtet ist, und wobei die Dekorschicht und die Kaschierklebstoffschicht zwischen der Trägerplatte und der thermoplastischen Trägerfolie angeordnet sind.

Gemäß einer alternativen Ausgestaltung kann es vorgesehen sein, dass die erfindungsgemäße Verschleißschutzfolie auf eine eine Dekorschicht aufweisende Trägerplatte thermisch auskaschiert ist. Insoweit in einer alternativen Ausgestaltung ein Dekorpaneel vorgeschlagen welches eine Trägerplatte, zumindest eine Dekorschicht und eine erfindungsgemäße Verschleißschutzfolie auf, wobei die Verschleißschutzfolie trägerfolienseitig zur Trägerplatte ausgerichtet ist, und wobei die Dekorschicht zwischen der Trägerplatte und der thermoplastischen Trägerfolie angeordnet ist. Zur Herstellung eines solchen Dekorpaneels kann es beispielsweise vorgesehen sein, dass die mit der Dekorschicht versehene Trägerplatte auf eine Temperatur von ca. 100°C vorgewärmt wird und eine erfindungsgemäße Verschleißschutzfolie auf die vorgewärmte Trägerplatte bei einer Kaschiertemperatur zwischen größer oder gleich 140°C bis kleiner oder gleich 160°C, vorzugsweise zwischen größer oder gleich 150°C bis kleiner oder gleich 160°C aufkaschiert wird.

Es konnte überraschenderweise gezeigt werden, dass derartige Dekorpaneele im Vergleich zu anderen Dekorpaneelen gute Verschleißeigenschaften aufweisen und zugleich eine einfachere und flexiblere Herstellbarkeit aufweisen. Zudem sind derartige Dekorpaneele besser rezyklierbar, da insbesondere auf die Verwendung von Melaminharzen und Lacken, wie beispielsweise Acrylat-, Polyurethan- oder Epoxylacke, verzichtet werden kann.

Unter "trägerfolienseitig" ist zu verstehen, dass die Verschleißschutzfolie mit der Seite zur Trägerplatte ausgerichtet ist, an der sich die Trägerfolie befindet. Somit weist das Dekorpaneel einen Schichtverbund auf, aufweisend die Trägerplatte, die auf der Trägerplatte angeordnete thermoplastischer Trägerfolie und die auf der Trägerfolie angeordnete Verschleißschutzschicht, wobei zwischen Verschleißschutzschicht und thermoplastischer Trägerfolie die Haftvermittlerschicht angeordnet ist und zwischen Trägerplatte und thermoplastischer Trägerfolie die Dekorschicht und die optionale Kaschierklebstoffschicht angeordnet sind.

Unter dem Begriff "Dekorpaneel" sind im Sinne der vorliegenden Erfindung Wand-, Decken, Tür- oder Bodenpaneele zu verstehen, welche ein auf eine Trägerplatte aufgebrachtes Dekor aufweisen. Dekorpaneele werden dabei in vielfältiger Weise sowohl im Bereich des Innenausbaus von Räumen, als auch zur dekorativen Verkleidung von Bauten, beispielsweise im Messebau verwendet. Eine der häufigsten Einsatzbereiche von Dekorpaneelen ist deren Nutzung als Fußbodenbelag, zum Verkleiden von Decken, Wänden oder Türen. Die Dekorpaneele weisen dabei vielfach ein Dekor und eine Oberflächenstrukturierung auf, welche einen Naturwerkstoff imitieren soll.

Unter einer "Trägerplatte" ist im Sinne der vorliegenden Erfindung eine in einem fertig gestellten Paneel als Kern beziehungsweise als Basislage dienende Lage zu verstehen, die insbesondere einen Naturstoff, wie etwa einen Holzwerkstoff, einen Faserwerkstoff oder einen Werkstoff umfassend einen Kunststoff aufweisen kann. Beispielsweise kann die Trägerplatte einem Paneel eine geeignete Stabilität verleihen oder zu dieser beitragen.

Holzwerkstoffe im Sinne der Erfindung sind dabei neben Vollholzwerkstoffen auch Materialien wie z.B. Brettsperrholz, Brettschichtholz, Stabsperrholz, Furniersperrholz, Furnierschichtholz, Furnierstreifenholz und Biegesperrholz. Darüber hinaus sind unter Holzwerkstoffen im Sinne der Erfindung auch Holzspanwerkstoffe wie z.B. Spanpressplatten, Strangpressplatten, Grobspanplatten (Oriented Structural Board, OSB) und Spanstreifenholz sowie auch Holzfaserwerkstoffe wie z.B. Holzfaserdämmplatten (HFD), mittelharte und harte Faserplatten (MB, HFH), sowie insbesondere mitteldichte Faserplatten (MDF) und hochdichte Faserplatten (HDF) zu verstehen. Auch moderne Holzwerkstoffe wie Holz-Polymer-Werkstoffe (Wood Plastic Composite, WPC), Sandwichplatten aus einem leichten Kernmaterial wie Schaumstoff, Hartschaum oder Papierwaben und einer darauf aufgebrachten Holzschicht, sowie mineralisch, z.B. mit Zement, gebundene Holzspanplatten bilden Holzwerkstoffe im Sinne der Erfindung. Auch Kork stellt dabei einen Holzwerkstoff im Sinne der Erfindung dar.

Kunststoffe, welche bei der Herstellung entsprechender Paneele beziehungsweise der Trägerplatten eingesetzt werden können, sind beispielsweise thermoplastische Kunststoffe, wie Polyvinylchlorid, Polyolefine (beispielsweise Polyethylen (PE), Polypropylen (PP), Polyamide (PA), Polyurethane (PU), Polystyrol (PS), Acrylnitril-Butadien-Styrol (ABS), Polymethylmethacrylat (PMMA), Polycarbonat (PC), Polyethylenterephthalat (PET), Polyetheretherketon (PEEK) oder Mischungen oder Co-Polymerisate dieser. Die Kunststoffe können übliche Füllstoffe enthalten, beispielsweise Kalziumcarbonat (Kreide), Aluminiumoxid, Kieselgel, Quarzmehl, Holzmehl, Gips. Auch können sie in bekannter Weise eingefärbt sein.

Die Trägerplatte kann dabei insbesondere eine bahnartiger Trägerplatte oder eine plattenförmige Trägerplatte sein. Unter einer "bahnartigen Trägerplatte" kann dabei eine Trägerplatte verstanden werden, die etwa in ihrem Herstellungsprozess eine bahnartige und damit im Vergleich zu seiner Dicke beziehungsweise Breite deutlich größere Länge aufweist und deren Länge beispielsweise größer als 15 Meter betragen kann.

Unter einer "plattenförmigen Trägerplatte" kann dabei ferner im Sinne der vorliegenden Erfindung eine Trägerplatte verstanden werden, der durch Vereinzelung aus der bahnartigen Trägerplatte geformt ist und in der Form einer Platte ausgebildet ist. Ferner kann die plattenförmige Trägerplatte bereits die Form und/oder Größe eines Dekorpaneels in Größe handelsüblicher Paneele vorgeben. Jedoch kann die plattenförmige Trägerplatte auch als Großplatte vorgesehen sein. Eine Großplatte im Sinne der Erfindung ist dabei insbesondere eine Trägerplatte, dessen Abmessungen die Abmessungen der letztendlichen Dekorpaneele um ein Mehrfaches überschreiten und welche im Laufe des Herstellungsverfahrens in eine entsprechende Mehrzahl von Dekorpaneelen zerteilt wird, beispielsweise durch Sägen, Laser- oder Wasserstrahlschneiden. Beispielsweise kann die Großplatte der bahnförmigen Trägerplatte entsprechen.

Unter einer "Dekorschicht" ist im Sinne der vorliegenden Erfindung eine optisch wahrnehmbare Schicht zu verstehen, die ein Dekor aufweist. Vielfach kann das Dekor dabei einen Naturwerkstoff imitieren. Beispiele für solche nachempfundenen Naturwerkstoffe sind Holzarten wie beispielsweise Ahorn, Eiche, Birke, Kirsche, Esche, Nussbaum, Kastanie, Wenge oder auch exotische Hölzer wie Panga-Panga, Mahagoni, Bambus und Bubinga. Darüber hinaus werden vielfach Naturwerkstoffe wie Steinoberflächen oder Keramikoberflächen nachempfunden.

Unter einer "Kaschierklebstoffschicht" ist im Sinne der vorliegenden Erfindung eine Schicht aufweisend einen Kaschierklebstoff zu verstehen, die angrenzenden Schichten miteinander verklebt.

Bevorzugt kann vorgesehen sein, dass die Dekorschicht auf der Trägerplatte und/oder der thermoplastischen Trägerfolie angeordnet ist.

Darunter ist zu verstehen, dass die Dekorschicht die Trägerplatte kontaktiert oder die thermoplastische Trägerfolie kontaktiert oder eine erste Dekorschicht die Trägerplatte kontaktiert und eine zweite Dekorschicht die thermoplastische Trägerfolie kontaktiert.

Indem die Dekorschicht auf der Trägerplatte angeordnet ist, lässt sich das Dekorpaneel besonders einfach mit bekannten Mitteln herstellen. Vorteilhafterweise kann dabei erreicht werden, dass das Dekor besonders präzise aufgebracht werden kann, weil die Trägerplatte eine gewisse Stabilität aufweist, die ein genaues Aufbringen des Dekors erleichtert. Indem die Dekorschicht auf der thermoplastischen Trägerfolie angebracht ist, kann erreicht werden, dass das Dekor besonders präzise an einer Strukturierung der Verschleißschutzschicht ausgerichtet ssein kann. Durch eine erste Dekorschicht auf der Trägerplatte und eine zweite Dekorschicht auf der Trägerfolie lassen sich vorteilhafterweise Tiefeneffekte im Dekor verwirklichen.

Mit anderen Worten kann vorgesehen sein, dass die Dekorschicht die Trägerplatte kontaktiert und auf der Dekorschicht die Kaschierklebstoffschicht angeordnet ist, wobei auf der Kaschierklebstoffschicht die thermoplastische Trägerfolie angeordnet ist. Alternativ kann vorgesehen sein, dass die Kaschierklebstoffschicht die Trägerplatte kontaktiert und auf der Kaschierklebstoffschicht die Dekorschicht angeordnet ist, wobei auf der Dekorschicht die thermoplastische Trägerfolie angeordnet ist. Weiter alternativ kann vorgesehen sein, dass eine erste Dekorschicht die Trägerplatte kontaktiert und auf der ersten Dekorschicht die Kaschierklebstoffschicht angeordnet ist, wobei auf der Kaschierklebstoffschicht eine zweite Dekorschicht angeordnet ist, die die thermoplastische Trägerfolie kontaktiert.

Bevorzugt kann vorgesehen sein, dass die Dekorschicht einen Druckuntergrund einen Dekordruck und optional eine Primerschicht umfasst.

Dadurch kann erreicht werden, dass das Dekor besonders präzise aufgebracht werden kann und besonders beständig ist, sowie eine besonders hohe Farbtreue aufweist.

Bevorzugt kann vorgesehen sein, dass die Kaschierklebstoffschicht einen Kaschierklebstoff aufweist ausgewählt aus der Gruppe bestehend aus Schmelzklebstoff und UV-härtbarem Klebstoff, insbesondere acrylbasierte UV-Klebstoffe.

Dadurch weisen Trägerplatte und thermoplastische Trägerfolie eine besonders starke und haltbare Verbindung auf.

Bevorzugt kann vorgesehen sein, dass die Trägerplatte Polypropylen, Polyethylen, Polyvinylchlorid, Copolymere davon und Mischungen davon aufweist.

Dadurch kann erreicht werden, dass die Trägerplatte besonders gut mit der Verschleißschutzfolie verbunden ist und das Dekorpaneel insgesamt gute mechanische Eigenschaften aufweist. Ferner kann dadurch erreicht werden, dass das Dekorpaneel als Ganzes eine besonders gute Rezyklierbarkeit aufweist.

Bevorzugt kann vorgesehen sein, dass die Trägerplatte ein Matrixmaterial und ein Feststoffmaterial aufweist, wobei das Matrixmaterial in einer Menge, bezogen auf die Trägerplatte, von ≥ 20 Gew.-% bis ≤ 55 Gew.-%, insbesondere von ≥ 35 Gew.-% bis ≤ 45 Gew.-%, vorliegt und wobei das Feststoffmaterial in einer Menge, bezogen auf die Trägerplatte, von ≥ 45 Gew.-% bis ≤ 80 Gew.-%, insbesondere von ≥ 55 Gew.-% bis ≤ 65 Gew.-%, vorliegt, und wobei das Matrixmaterial und das Feststoffmaterial gemeinsam, bezogen auf die Trägerplatte, in einer Menge von ≥ 95 Gew.-%, insbesondere ≥ 99 Gew.-%, vorliegen.

In Abhängigkeit des gewünschten Anwendungsgebietes und der gewünschten Eigenschaften des Paneels können die Anteile an Matrixmaterial beziehungsweise Feststoffmaterial wählbar sein. Dadurch kann eine gute Adaptierbarkeit an das gewünschte Anwendungsgebiet möglich werden. Grundsätzlich kann es jedoch bevorzugt sein, dass der Anteil des Feststoffmaterials größer oder gleich dem Anteil des Matrixmaterials ist. Es hat sich gezeigt, dass ein erfindungsgemäßes Dekorpaneel mit einer Trägerplatte mit der vorbeschriebenen Zusammensetzung besonders gut rezyklierbar ist und zugleich besonders gute mechanische Eigenschaften aufweist.

Bevorzugt kann vorgesehen sein, dass das Feststoffmaterial zu wenigstens 50 Gew.-%, insbesondere zu wenigstens 80 Gew.-%, insbesondere zu wenigstens 95 Gew.-%, bezogen auf das Feststoffmaterial, gebildet ist aus einer Feststoffzusammensetzung bestehend aus wenigstens einem ersten Schichtsilikatpulver und einem zweiten Schichtsilikatpulver, und das Matrixmaterial zu wenigstens 50 Gew.-%, insbesondere zu wenigstens 80 Gew.-%, insbesondere zu wenigstens 95 Gew.-%, bezogen auf das Matrixmaterial, gebildet ist durch eine Kunststoffzusammensetzung bestehend aus einem Homopolymer und wenigstens einem ersten Copolymer und einem zweiten Copolymer.

Unter Schichtsilikatpulver wird dabei in an sich bekannter Weise ein Pulver aus einem Schichtsilikat verstanden. Als Schichtsilikat bezeichnet man bekannter Weise Minerale aus der Gruppe der Silikate, deren Silikatanionen üblicherweise in Schichten angeordnet sind. Beispielsweise werden unter Schichtsilikaten Minerale aus der Glimmergruppe, der Chloritgruppe, der Kaolinitgruppe und der Serpentingruppe verstanden.

Somit ist das Feststoffmaterial vorteilhafterweise zumindest durch einen Großteil aus dem mineralischen Stoff Schichtsilikat gebildet, wobei dieser Stoff etwa als Pulverform eingesetzt werden kann beziehungsweise in der Trägerplatte in Form von Partikeln vorliegen kann. Grundsätzlich kann das Feststoffmaterial aus einem pulverförmigen Feststoff bestehen.

Schichtsilikate bieten den Vorteil, dass sie die Herstellung eines Trägers mit guten mechanischen Eigenschaften erlauben können und sich gleichzeitig durch ihre Schichtstruktur gut zu entsprechenden Pulvern verarbeiten lassen können.

Bevorzugt kann vorgesehen sein, dass die Feststoffzusammensetzung das erste Schichtsilikatpulver zu ≥ 35 Gew.-% bis ≤ 85 Gew.-%, bevorzugt ≥ 50 Gew.-% bis ≤ 70 Gew.-%, bezogen auf die Feststoffzusammensetzung, in Form von Partikeln aufweist, die eine Partikelgröße D₅₀ aufweisen in einem Bereich von ≥ 3µm bis ≤ 6µm, und/oder die eine Partikelgröße D₉₈ aufweisen in einem Bereich von ≥ 10µm bis ≤ 30µm, und das zweite Schichtsilikatpulver zu ≥ 15 Gew.-% bis ≤ 65 Gew.-%, bevorzugt ≥ 30 Gew.-% bis ≤ 50 Gew.-%, bezogen auf die Feststoffzusammensetzung, in Form von Partikeln aufweist, die eine Partikelgröße D₅₀ aufweisen in einem Bereich von ≥ 6µm bis ≤ 10µm, und/oder die eine Partikelgröße D₉₈ aufweisen in einem Bereich von ≥ 20µm bis ≤ 40µm.

Insbesondere unter Verwendung von Schichtsilikatpulver mit Partikeln weist die Trägerplatte beziehungsweise das Dekorpaneel besonders bevorzugten mechanischen Eigenschaften auf. Zur Bestimmung der Partikelgrößenverteilung kann auf die allgemein bekannten Verfahren, wie beispielsweise die Laserdiffraktometrie, zurückgegriffen werden, mit welcher Partikelgrößen im Bereich von einigen Nanometern bis hin zu mehreren Millimetern bestimmt werden können. Mittels dieser Methode lassen sich auch D₅₀ bzw. D₉₈ Werte ermitteln, welche jeweils aussagen, dass 50% (D₅₀) bzw. 98% (D₉₈) der gemessenen Partikel kleiner sind als der jeweils angegebene Wert. Gleiches gilt für die Bestimmung der Korngröße bzw. mittleren Korngröße. Auch diese Werte lassen sich bevorzugt mittels Laserdiffraktometrie bestimmen. Im Falle der Abweichung der mittels unterschiedlicher Messverfahren erhaltenen Messwerte wird seitens des Anmelders der mittels Laserdiffraktometrie ermittelte Wert als maßgeblich angesehen.

Weiterhin kann es vorteilhaft sein, wenn das erste Schichtsilikatpulver bei einer Schüttdichte nach DIN 53468 vorliegt in einem Bereich von ≥ 2,4 g/cm³ bis ≤ 3,6 g/cm³, etwa in einem Bereich von ≥ 2,9 g/cm³ bis ≤ 3,1 g/cm³. Weiterhin kann es vorteilhaft sein, wenn das zweite Schichtsilikatpulver bei einer Schüttdichte nach DIN 53468 vorliegt in einem Bereich von ≥ 3,4 g/cm³ bis ≤ 4,6 g/cm³, etwa in einem Bereich von ≥ 3,9 g/cm³ bis ≤ 4,1 g/cm³. Insbesondere kann vorgesehen sein, dass das erste Schichtsilikatpulver bei einer Schüttdichte nach DIN 53468 vorliegt, die kleiner oder gleich ist der Schüttdichte bei der das zweite Schichtsilikatpulver vorliegt.

Gemäß einer Ausgestaltung der Erfindung kann es vorgesehen sein, dass das Homopolymer, das erste Copolymer und/oder das zweite Copolymer zumindest Teilweise aus rezykliertem Material besteht. Dabei kann gemäß einer weiteren Ausgestaltung der Erfindung der Anteil an rezykliertem Material je Polymer- bzw. Copolymerart in einem Bereich von ≥ 2 Gew.-% bis ≤ 100 Gew.-%, bevorzugt ≥ 5 Gew.-% bis ≤ 90 Gew.-%, insbesondere ≥ 10 Gew.-% bis ≤ 80 Gew.-%, wie beispielsweise ≥ 15 Gew.-% bis ≤ 70 Gew.-% liegen. Dabei kann es weiter vorgesehen sein, dass der Anteil an rezykliertem Material je Polymer- bzw. Copolymerarten unterschiedlichen ist. Insbesondere kann es vorgesehen sein, dass wenigstens eine Polymer- bzw. Copolymerart einen Anteil von ≤90 Gew.-% an rezykliertem Material aufweist, während die weiteren Polymer- bzw. Copolymerarten unabhängig voneinander einen Anteil von rezykliertem Material ≥ 50 Gew.-%, insbesondere ≥10 Gew.-% aufweisen.

Dadurch, dass das Matrixmaterial insbesondere einen Kunststoff, wie etwa einen thermoplastischen Kunststoff, aufweist, kann es trotz der hohen Stabilität ermöglicht werden, das Dekorpaneel sehr elastisch beziehungsweise federnd und/oder biegeweich sein kann, was einen komfortablen Eindruck beim Begehen erlaubt und ferner die auftretenden Geräusche bei einem Begehen im Vergleich zu herkömmlichen Materialien reduzieren kann und somit ein verbesserter Trittschall realisierbar sein kann.

Bevorzugt kann vorgesehen sein, dass das Homopolymer, das erste Copolymer und das zweite Copolymer Polypropylen umfassen. Polypropylen ist als Matrixmaterial besonders geeignet, da es zum einen kostengünstig erhältlich ist und ferner als thermoplastischer Kunststoff gute Eigenschaften als Matrixmaterial zum Einbetten des Feststoffmaterials aufweist.

Dadurch kann insbesondere auch erreicht werden, dass das Dekorpaneel besonders gut rezyklierbar ist.

Bevorzugt kann vorgesehen sein, dass das erste Copolymer ein heterophasisches Polypropylen umfasst und das zweite Copolymer ein Ethylen-Propylen-Copolymer und ein isotaktisches Polypropylen umfasst.

Dadurch kann insbesondere auch erreicht werden, dass das Dekorpaneel besonders gut rezyklierbar ist.

Weiter bevorzugt kann vorgesehen sein, dass das zweite Copolymer einen Ethylenanteil von ≥ 8 Gew.-% bis ≤ 22 Gew.-%, vorzugsweise von ≥ 13 Gew.-% bis ≤ 17 Gew.-%, aufweist.

Bevorzugt kann vorgesehen sein, dass die Schmelzflussrate des Homopolymers größer ist als die Schmelzflussrate des ersten Copolymers und des zweiten Copolymers.

Bevorzugt kann vorgesehen sein, dass die Schmelzflussrate des zweiten Copolymers größer ist als die Schmelzflussrate des ersten Copolymers.

Bevorzugt kann vorgesehen sein, dass das Homopolymer, bezogen auf die Kunststoffzusammensetzung in einem Anteil von ≥ 10 Gew.-% bis ≤ 40 Gew.-% und/oder dass das erste Copolymer bezogen auf die Kunststoffzusammensetzung in einem Anteil von ≥ 40 Gew.-% bis ≤ 70 Gew.-% und/oder dass das zweite Copolymer bezogen auf die Kunststoffzusammensetzung in einem Anteil von ≥ 10 Gew.-% bis ≤ 40 Gew.-% vorliegt.

Bevorzugt kann vorgesehen sein, dass das Feststoffmaterial neben der Feststoffzusammensetzung wenigstens einen weiteren Feststoff aufweist.

Es kann bevorzugt vorgesehen sein, dass der weitere Feststoff eine Rohdichte aufweist, die in einem Bereich liegt von ≤ 2000 kg/m³, insbesondere von ≤ 1500 kg/m³, beispielsweise von ≤ 1000 kg/m³, besondere bevorzugt von ≤ 500 kg/m³ und/oder dass der weitere Feststoff ausgewählt ist aus der Gruppe bestehend aus Holz, Blähton, Vulkanasche, Bims, Porenbeton, anorganischen Schäumen und Cellulose.

Es hat sich gezeigt, dass erfindungsgemäße Dekorpaneele mit den vorbeschriebenen Merkmalen einzeln und in Kombination jeweils besonders gute mechanische Eigenschaften aufweisen. Ferner konnte gezeigt werden, dass sich diese besonders gut mit der Verschleißschutzfolie rezyklieren lassen und die Verschleißschutzfolie besonders gut mit der entsprechenden Trägerplatte verbunden ist.

Weiter bevorzugt kann vorgesehen sein, dass die Verschleißschutzschicht zumindest teilweise eine Oberflächenstrukturierung aufweist und die Oberflächenstrukturierung zumindest teilweise synchron zu einem Dekor der Dekorschicht ist.

Dadurch kann das Dekorpaneel ein Vorlagenmaterial besonders gut nachahmen.

Mit der Erfindung wird ferner ein Verfahren zur Herstellung der erfindungsgemäßen Verschleißschutzfolie vorgeschlagen. Bei dem Verfahren wird ein thermoplastischer Kunststoff zu einer thermoplastischen Trägerfolie, ein Haftvermittler zu einer Haftvermittlerschicht und eine Mischung aufweisend Polymethylmethacrylat und Polyorganosiloxan zu einer Verschleißschutzschicht unter Ausbildung der Verschleißschutzfolie coextrudiert, extrusionsbeschichtet und/oder laminiert, bevorzugt coextrudiert.

Unter Coextrudieren ist insbesondere zu verstehen, dass der thermoplastische Kunststoff zu der thermoplastischen Trägerfolie, der Haftvermittler zu der Haftvermittlerschicht und die Mischung aufweisend Polymethylmethacrylat und Polyorganosiloxan zu der Verschleißschutzschicht unter Ausbildung der Verschleißschutzfolie coextrudiert werden. Darunter ist zu verstehen, dass der thermoplastische Kunststoff, der Haftvermittler und die Mischung aufweisend Polymethylmethacrylat und Polyorganosiloxan jeweils mit einem Extruder extrudiert werden und direkt zusammengeführt werden, wobei die Verschleißschutzfolie direkt erhalten wird.

Durch das vorbeschriebene Verfahren kann die erfindungsgemäße Verschleißschutzfolie vorteilhafterweise besonders gut hergestellt werden.

Unter Extrusionsbeschichten ist insbesondere zu verstehen, dass zumindest eine von der thermoplastischen Trägerfolie, der Haftvermittlerschicht und der Verschleißschutzschicht in einem ersten Schritt separat extrudiert wird und in einem zweiten und dritten Schritt die verbleibenden Schichten auf die zuerst extrudierte Schicht aufextrudiert werden.

Bei dieser Ausgestaltung kann bevorzugt vorgesehen sein, dass die thermoplastische Trägerfolie im ersten Schritt hergestellt wird, im zweiten Schritt die Haftvermittlerschicht auf die thermoplastische Trägerfolie aufextrudiert wird und im dritten Schritt die Verschleißschutzschicht auf die Haftvermittlerschicht aufextrudiert wird.

Unter Laminieren ist insbesondere zu verstehen, dass die Schichten alle einzeln hergestellt werden und in einem separaten Schritt miteinander verbunden werden.

Es kann vorgesehen sein, dass die Verfahren miteinander kombiniert werden. Beispielsweise kann vorgesehen sein, dass die thermoplastische Trägerfolie in einem ersten Schritt hergestellt wird und die Haftvermittlerschicht in einem zweiten Schritt aufextrudiert wird. In einem dritten Schritt kann beispielsweise die Verschleißschutzschicht separat extrudiert werden und anschließend auf den Schichtverbund aus thermoplastischer Trägerfolie und Haftvermittlerschicht laminiert werden. Alternativ können beispielsweise die thermoplastische Trägerfolie und die Haftvermittlerschicht coextrudiert werden. Die Verschleißschutzschicht kann dann auch separat extrudiert werden und anschließend auf den Schichtverbund aus thermoplastischer Trägerfolie und Haftvermittlerschicht laminiert werden.

Es kann bevorzugt vorgesehen sein, dass der thermoplastische Kunststoff, der Haftvermittler und die Mischung aus Polymethylmethacrylat und Polyorganosiloxan, bzw. Polymethylmethacrylat und Polyorganosiloxan als schüttfähiger Feststoff bereitgestellt werden, insbesondere beispielsweise als Granulat, und in den entsprechenden Extruder gegeben werden.

Unter einem "schüttfähigen" Feststoff kann insbesondere ein Feststoff verstanden werden, welcher durch einen Schüttvorgang beziehungsweise Streuvorgang auf eine Unterlage aufgebracht werden kann. Ferner kann unter einem "Granulat" beziehungsweise einem "granularen Material" ein Feststoff beziehungsweise ein Haufwerk eines Feststoffs verstanden werden, welcher eine Vielzahl fester Partikel, wie etwa Körner oder Kugeln, umfasst beziehungsweise daraus besteht. Beispielhaft aber nicht abschließend seien hier körnige oder pulverförmige Materialien genannt.

Mit der Erfindung wird ferner ein Verfahren zur Herstellung eines erfindungsgemäßen Dekorpaneels vorgeschlagen. Das Verfahren weist zumindest die Verfahrensschritte auf:
a) Bereitstellen einer erfindungsgemäßen Verschleißschutzfolie,
b) Bereitstellen einer Trägerplatte,
c) Aufbringen einer Dekorschicht auf die Trägerplatte und/oder die thermoplastische Trägerfolie der Verschließschutzfolie,
d) Aufbringen einer Kaschierklebstoffschicht auf die Trägerplatte und/oder die thermoplastische Trägerfolie der Verschleißschutzfolie,
e) Verbinden der Verschleißschutzfolie und der Trägerplatte unter Ausbildung des Dekorpaneels.

Durch das vorbeschriebene Verfahren kann das erfindungsgemäße Dekorpaneel vorteilhafterweise besonders gut hergestellt werden.

Unter dem Verbinden der Verschleißschutzfolie und der Trägerplatte ist zu verstehen, dass diese über die in den Schritten c) und d) aufgebrachten Schichten verbunden werden.

Das Bereitstellen der erfindungsgemäßen Verschleißschutzfolie kann bevorzugt das Verfahren zur Herstellung der erfindungsgemäßen Verschleißschutzfolie umfassen.

In einer bevorzugten Ausgestaltung kann vorgesehen sein, dass die Verschleißschutzfolie separat vom Dekorpaneel hergestellt wird.

Somit kann bei der Herstellung des Dekorpaneels sichergestellt werden, dass nur fehlerfreie Verschleißschutzfolie für die Herstellung verwendet wird. Dadurch kann vorteilhafterweise der Ausschuss bei der Herstellung von Dekorpaneelen reduziert werden, da bei einem Fehler in der Verschleißschutzfolie nicht das gesamte Dekorpaneel verworfen werden muss.

In einer alternativen bevorzugten Ausgestaltung kann vorgesehen sein, dass die Verschleißschutzfolie mit der Trägerplatte verbunden bereitgestellt wird. In anderen Worten ist darunter zu verstehen, dass die Verschleißschutzfolie nach den Schritten c) und d) bereitgestellt wird, wobei die Verschleißschutzfolie unter Ausbildung des Dekorpaneels verbunden mit der Trägerplatte hergestellt wird.

Dadurch kann vorteilhafterweise erreicht werden, dass das Verfahren in einem einzelnen Prozess durchgeführt wird, wobei der Prozess vorzugsweise kontinuierlich ist.

Beispielsweise kann bevorzugt vorgesehen sein, dass die Verschleißschutzfolie entsprechend dem erfindungsgemäßen Verfahren direkt auf die aufgebrachte Kaschierklebstoffschicht coextrudiert wird. Alternativ kann vorgesehen sein, dass die thermoplastische Trägerfolie auf die Kaschierklebstoffschicht aufextrudiert oder laminiert wird und anschließend die Haftvermittlerschicht und die Verschleißschutzschicht auf die thermoplastische Trägerfolie aufextrudiert oder laminiert werden.

In einer bevorzugten Ausgestaltung kann vorgesehen sein, dass das Bereitstellen einer Trägerplatte umfasst:
i) Bereitstellen eines schüttfähigen Trägermaterials umfasst, insbesondere eines Granulats, wobei das Trägermaterial ausgestaltet sein kann, wie dies vorstehend im Detail beschrieben ist,
ii) Anordnen des Trägermaterials zwischen zwei bandartigen Fördermitteln,
iii) Formen des Trägermaterials unter Einwirkung von Temperatur unter Ausbildung eines bahnförmigen Trägers,
iv) Komprimieren des Trägers,
v) Behandeln des Trägers unter Einwirkung von Druck unter Verwendung einer Zweibandpresse,
vi) gegebenenfalls Abkühlen des Trägers.

In einer bevorzugten Ausgestaltung kann vorgesehen sein, dass in Schritt c) die Dekorschicht auf die Trägerplatte aufgebracht wird und in Verfahrensschritt d) die Kaschierklebstoffschicht auf die Dekorschicht auf der Trägerplatte aufgebracht wird. In anderen Worten kann vorgesehen sein, dass in Schritt c) die Dekorschicht auf die Trägerplatte aufgebracht wird und in Verfahrensschritt d) die Kaschierklebstoffschicht auf die Trägerplatte aufgebracht wird, wobei darunter zu verstehen ist, dass die Kaschierklebstoffschicht auf die Dekorschicht aufgebracht wird, die sich bereits auf der Trägerplatte befindet.

Dadurch kann ein Dekorpaneel hergestellt werden, welches eine Dekorschicht aufweist, die auf der Trägerplatte aufgebracht ist und über die Kaschierklebstoffschicht mit der thermoplastischen Trägerfolie verbunden wird.

In einer alternativen bevorzugten Ausgestaltung kann vorgesehen sein, dass in Schritt c) die Dekorschicht auf die thermoplastische Trägerfolie der Verschleißschutzfolie aufgebracht wird und in Verfahrensschritt d) die Kaschierklebstoffschicht auf die Trägerplatte aufgebracht wird.

In einer weiteren alternativ bevorzugten Ausgestaltung kann vorgesehen sein, dass in Schritt c) die Dekorschicht auf die thermoplastische Trägerfolie der Verschleißschutzfolie aufgebracht wird und in Verfahrensschritt d) die Kaschierklebstoffschicht auf die Dekorschicht aufgebracht wird.

Weiter alternativ kann vorgesehen sein, dass in Schritt c) eine erste Dekorschicht auf die thermoplastische Trägerfolie aufgebracht wird und eine zweite Dekorschicht auf die Trägerplatte aufgebracht wird und in Verfahrensschritt d) die Kaschierklebstoffschicht auf die Trägerplatte oder die thermoplastische Trägerfolie aufgebracht wird.

Bevorzugt kann vorgesehen sein, dass nach Schritt d) eine lackhaltige Deckschicht auf die Verschleißschutzschicht aufgebracht wird, wobei die lackhaltige Deckschicht vorzugsweise einen Decklack aufweist ausgewählt aus der Gruppe bestehend aus Melaminharz und acrylatbasierten Kunststoffzusammensetzungen, insbesondere aus polyurethanmodifizierten Acrylat-Kunststoffzusammensetzungen.

Bevorzugt kann vorgesehen sein, dass die Verschleißschutzschicht zumindest teilweise mit einer Oberflächenstrukturierung versehen wird, vorzugsweise mit einer zur Dekorschicht zumindest teilweise synchronen Oberflächenstrukturierung.

Die Erfindung ist nachfolgend anhand der Figuren weiter erläutert. Die Figuren zeigen mögliche Ausgestaltung der Erfindung. Prinzipiell sind jedoch auch Kombinationen oder Abwandlungen der Ausgestaltung im Rahmen der Erfindung möglich.
Fig. 1 zeigt schematisch den Aufbau einer erfindungsgemäßen Verschleißschutzfolie.
Fig. 2 zeigt schematisch den Aufbau einer ersten Ausgestaltung eines erfindungsgemäßen Dekorpaneels.
Fig. 3 zeigt schematisch den Aufbau einer zweiten Ausgestaltung eines erfindungsgemäßen Dekorpaneels.

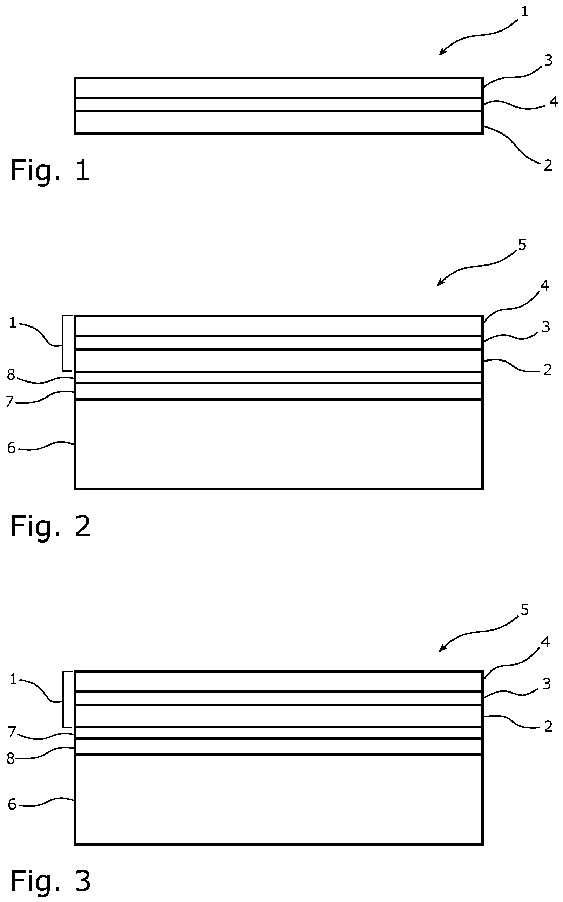

Im Detail zeigt Fig. 1 schematisch den Querschnitt einer erfindungsgemäßen Verschleißschutzfolie 1. Die Verschleißschutzfolie 1 weist eine thermoplastische Trägerfolie 2 auf und eine auf der thermoplastischen Trägerfolie 2 angeordnete Verschleißschutzschicht 3, wobei zwischen der thermoplastischen Trägerfolie 2 und der Verschleißschutzschicht 3 zumindest teilweise eine Haftvermittlerschicht 4 angeordnet ist. Die Verschleißschutzfolie 1 wird demnach aus einem Stapel aus zumindest der thermoplastischen Trägerfolie 2, der Haftvermittlerschicht 4 und der Verschleißschutzschicht 3 gebildet. Die thermoplastische Trägerfolie 2 weist einen thermoplastischen Kunststoff auf, die Haftvermittlerschicht 4 weist einen Haftvermittler auf und die Verschleißschutzschicht 3 weist eine Mischung aufweisend ein Polymethylmethacrylat und Polyorganosiloxan auf.

Die gezeigte Verschleißschutzfolie 1 wurde hergestellt nach dem erfindungsgemäßen Verfahren, indem der thermoplastische Kunststoff zur thermoplastischen Trägerfolie 2, der Haftvermittler zur Haftvermittlerschicht 4 und die Mischung aufweisend Polymethylmethacrylat und Polyorganosiloxan zur Verschleißschutzschicht 3 unter Ausbildung der Verschließschutzfolie 1 coextrudiert wurden.

Im Detail zeigen Fig. 2 und 3 schematisch den Querschnitt von zwei verschiedenen Ausgestaltungen des erfindungsgemäßen Dekorpaneels 5. Das Dekorpaneel 5 weist eine Trägerplatte 6, eine Dekorschicht 7, eine Kaschierklebstoffschicht 8 und eine Verschleißschutzfolie 1 auf. Die Verschleißschutzfolie 1 weist erfindungsgemäß eine thermoplastische Trägerfolie 2 auf und eine auf der thermoplastischen Trägerfolie 2 angeordnete Verschleißschutzschicht 3, wobei zwischen der thermoplastischen Trägerfolie 2 und der Verschleißschutzschicht 3 zumindest teilweise eine Haftvermittlerschicht 4 angeordnet ist. Die Verschleißschutzfolie 1 ist trägerfolienseitig, also mit der Seite, an der sich die Trägerfolie 2 befindet, zu Trägerplatte 6 ausgerichtet, wobei die Dekorschicht 7 und die Kaschierklebstoffschicht 8 zwischen Trägerplatte 6 und thermoplastischer Trägerfolie 2 angeordnet sind.

In der in Fig. 2 dargestellten Ausgestaltung des Dekorpaneels 5 ist die Dekorschicht 7 direkt auf der Trägerplatte 6 angeordnet und die Kaschierklebstoffschicht 8 ist zwischen Dekorschicht 7 und thermoplastischer Trägerfolie 2 angeordnet. In der in Fig. 3 dargestellten Ausgestaltung des Dekorpaneels 5 ist im Gegensatz zu Fig. 2 die Kaschierklebstoffschicht 8 direkt auf der Trägerplatte 6 angeordnet und die Dekorschicht 7 ist zwischen thermoplastischer Trägerfolie 2 und Kaschierklebstoffschicht 8 angeordnet.

Die dargestellten Dekorpaneele wurden nach dem erfindungsgemäßen Verfahren hergestellt. Für die in Fig. 2 dargestellte Ausgestaltung wurden die Verschleißschutzfolie 1 und die Trägerplatte 6 bereitgestellt. Anschließend wurde die Dekorschicht 7 auf die Trägerplatte 6 aufgebracht. Danach wurde die Kaschierklebstoffschicht 8 auf die Trägerplatte 6 aufgebracht. Da die Trägerplatte 6 bereits mit der Dekorschicht 7 bedeckt war kontaktiert die Kaschierklebstoffschicht 7 dabei die Trägerplatte 6 nicht direkt, sondern befindet sich auf der Dekorschicht 7 auf der Trägerplatte 6. Anschließend wurden die Verschleißschutzfolie 1 und die mit Dekorschicht 7 und Kaschierklebstoffschicht 8 versehene Trägerplatte 6 unter Ausbildung des in Fig. 2 dargestellten Dekorpaneels 5 miteinander verbunden.

Für die in Fig. 3 dargestellte Ausgestaltung wurde die Verschleißschutzfolie 1 und die Trägerplatte bereitgestellt. Anschließend wurde die Dekorschicht 7 auf die thermoplastische Trägerfolie 2 der Verschließschutzfolie 1 aufgebracht. In einem anschließenden oder parallelen Schritt wurde die Kaschierklebstoffschicht 8 auf die Trägerplatte 6 aufgebracht. Anschließend wurden die trägerfolienseitig mit der Dekorschicht 7 versehene Verschleißschutzfolie 1 und die mit der Kaschierklebstoffschicht 8 versehene Trägerplatte 6 unter Ausbildung des in Fig. 3 dargestellten Dekorpaneels 5 miteinander verbunden.

### Bezugszeichen

- 1: Verschleißschutzfolie
- 2: thermoplastische Trägerfolie
- 3: Verschleißschutzschicht
- 4: Haftvermittlerschicht
- 5: Dekorpaneel
- 6: Trägerplatte
- 7: Dekorschicht
- 8: Kaschierklebstoffschicht

## Patentansprüche

1. Verschleißschutzfolie (1), **dadurch gekennzeichnet, dass** die Verschleißschutzfolie (1) eine thermoplastische Trägerfolie (2) und eine auf der thermoplastische Trägerfolie (2) angeordnete Verschleißschutzschicht (3) aufweist, wobei zwischen thermoplastischer Trägerfolie (2) und Verschleißschutzschicht (3) zumindest teilweise eine Haftvermittlerschicht (4) angeordnet ist,
wobei die thermoplastische Trägerfolie (2) einen thermoplastischen Kunststoff aufweist,
wobei die Haftvermittlerschicht (4) einen Haftvermittler aufweist, und
wobei die Verschleißschutzschicht (3) eine Mischung aufweisend ein Polymethylmethacrylat und Polyorganosiloxan aufweist, **dadurch gekennzeichnet, dass** das Polyorganosiloxan ein zahlenmittleres Molekulargewicht, gemessen wie in der Beschreibung beschrieben, in einem Bereich aufweist
von größer oder gleich 50 kDa bis kleiner oder gleich 700 kDa, bevorzugt von größer oder gleich 100 kDa bis kleiner oder gleich 500kDa, weiter bevorzugt größer oder gleich 150 kDa bis kleiner oder gleich 300 kDa.

2. Verschleißschutzfolie (1) nach Anspruch 1, **dadurch gekennzeichnet, dass** der thermoplastische Kunststoff ausgewählt ist aus der Gruppe bestehend aus Polypropylen, Polyvinylchlorid, Polyethylen, Copolymeren davon und Mischungen davon, wobei der thermoplastische Kunststoff insbesondere Polypropylen ist.

3. Verschleißschutzfolie (1) nach einem der Ansprüche 1 und 2, **dadurch gekennzeichnet, dass** der Haftvermittler ein Polyolefin-Copolymer ist, bevorzugt ein Polyolefin-Pfropfcopolymer, besonders bevorzugt ein Polypropylen-Pfropfcopolymer, insbesondere ein maleinsäureanhydridmodifiziertes Polypropylen-Pfropfcopolymer.

4. Verschleißschutzfolie (1) nach Anspruch 3, **dadurch gekennzeichnet, dass** das maleinsäureanhydridmodifizierte Polypropylen-Pfropfcopolymer einen Maleinsäureanteil in einem Bereich von größer oder gleich 0,1 Gew.-% bis kleiner oder gleich 5 Gew.-% aufweist, bezogen auf das maleinsäureanhydridmodifizierte Polypropylen-Pfropfcopolymer, bevorzugt von größer oder gleich 0,5 Gew.-% bis kleiner oder gleich 1,5 Gew.-%.

5. Verschleißschutzfolie (1) nach einem der Ansprüche 1 bis 4, **dadurch gekennzeichnet, dass** das Polymethylmethacrylat einen Schlagzähigkeitsmodifikator aufweist, insbesondere in einer Menge in einem Bereich von größer oder gleich größer oder gleich 0,1 Gew.-% bis kleiner oder gleich 5 Gew.-% aufweist, bezogen auf das Polymethylmethacrylat, bevorzugt von größer oder gleich 0,5 Gew.-% bis kleiner oder gleich 5 Gew.-%.

6. Verschleißschutzfolie (1) nach einem der Ansprüche 1 bis 5 **dadurch gekennzeichnet, dass** das Polyorganosiloxan ein Polydimethylsiloxan ist.

7. Verschleißschutzfolie (1) nach einem der Ansprüche 1 bis 6, **dadurch gekennzeichnet, dass** die Mischung aufweisend Polymethylmethacrylat und Polyorganosiloxan Polymethylmethacrylat aufweist in einem Bereich von größer oder gleich 90 Gew.-% bis kleiner 100 Gew.-% bezogen auf die Mischung, bevorzugt größer oder gleich 95 Gew.-% bis kleiner oder gleich 99,9 Gew.-%, weiter bevorzugt größer oder gleich 98 Gew.-% bis kleiner oder gleich 99,5 Gew.-%, besonders bevorzugt größer oder gleich 98,5 Gew.-% bis kleiner oder gleich 99 Gew.-%,
wobei die Mischung aufweisend Polymethylmethacrylat und Polyorganosiloxan Polyorganosiloxan aufweist in einem Bereich von größer 0 Gew.-% bis kleiner oder gleich 10 Gew.-% bezogen auf die Mischung, bevorzugt größer oder gleich 0,1 Gew.-% bis kleiner oder gleich 5 Gew.-%, weiter bevorzugt größer oder gleich 0,5 Gew.-% bis kleiner oder gleich 2 Gew.-%, besonders bevorzugt größer oder gleich 1 Gew.-% bis kleiner oder gleich 1,5 Gew.-%.

8. Dekorpaneel (5), **dadurch gekennzeichnet, dass** das Dekorpaneel (5) eine Trägerplatte (6), zumindest eine Dekorschicht (7) und eine Verschleißschutzfolie (1) nach einem der Ansprüche 1 bis 7 aufweist, wobei die Verschleißschutzfolie (1) trägerfolienseitig zur Trägerplatte (6) ausgerichtet ist, und wobei die Dekorschicht (7) und die Kaschierklebstoffschicht (8) zwischen der Trägerplatte (6) und der thermoplastischen Trägerfolie (2) angeordnet sind.

9. Dekorpaneel (5) gemäß Anspruch 8, **dadurch gekennzeichnet, dass** zwischen der Dekorschicht (7) und der Verschleißschutzfolie (1) zumindest eine Kaschierklebstoffschicht (8) angeordnet ist.

10. Dekorpaneel (5) nach Anspruch 8 oder 09, **dadurch gekennzeichnet, dass** die Dekorschicht (7) auf der Trägerplatte (6) und/oder der thermoplastischen Trägerfolie (2) angeordnet ist.

11. Dekorpaneel (5) nach einem der Ansprüche 9 oder 10, **dadurch gekennzeichnet, dass** die Kaschierklebstoffschicht (8) einen Kaschierklebstoff aufweist ausgewählt aus der Gruppe bestehend aus Schmelzklebstoff und UV-härtbarem Klebstoff.

12. Dekorpaneel nach einem der Ansprüche 8 bis 11, **dadurch gekennzeichnet, dass** die Trägerplatte (6) Polypropylen, Polyethylen, Polyvinylchlorid, Copolymere davon und Mischungen davon aufweist.

13. Verfahren zur Herstellung einer Verschleißschutzfolie (1) nach einem der Ansprüche 1 bis 8, wobei ein thermoplastischer Kunststoff zu einer thermoplastischen Trägerfolie (2), ein Haftvermittler zu einer Haftvermittlerschicht (4) und eine Mischung aufweisend Polymethylmethacrylat und Polyorganosiloxan zu einer Verschleißschutzschicht (3) unter Ausbildung der Verschleißschutzfolie (1) coextrudiert, extrusionsbeschichtet und/oder laminiert werden, bevorzugt coextrudiert, **dadurch gekennzeichnet, dass** das Polyorganosiloxan ein zahlenmittleres Molekulargewicht, gemessen wie in der Beschreibung beschrieben, in einem Bereich aufweist von größer oder gleich 50 kDa bis kleiner oder gleich 700 kDa, bevorzugt von größer oder gleich 100 kDa bis kleiner oder gleich 500kDa, weiter bevorzugt größer oder gleich 150 kDa bis kleiner oder gleich 300 kDa.

14. Verfahren zur Herstellung eines Dekorpaneels (5) nach einem der Ansprüche 8 bis 12, aufweisend zumindest die Verfahrensschritte:
a) Bereitstellen einer Verschleißschutzfolie (1) nach einem der Ansprüche 1 bis 8,
b) Bereitstellen einer Trägerplatte (6),
c) Aufbringen einer Dekorschicht (7) auf die Trägerplatte (6) und/oder die thermoplastische Trägerfolie (2) der Verschließschutzfolie (1),
d) optional Aufbringen einer Kaschierklebstoffschicht (8) auf die Trägerplatte (6) und/oder die thermoplastische Trägerfolie (2) der Verschleißschutzfolie (1),
e) Verbinden der Verschleißschutzfolie (1) und der Trägerplatte (6) unter Ausbildung des Dekorpaneels (1).

## Claims

1. Wear protection film (1), **characterized in that** the wear protection film (1) comprises a thermoplastic carrier film (2) and a wear protection layer (3) arranged on the thermoplastic carrier film (2), wherein an adhesion promoter layer (4) is arranged at least partially between the thermoplastic carrier film (2) and the wear protection layer (3),
wherein the thermoplastic carrier film (2) comprises a thermoplastic,
wherein the adhesion promoter layer (4) comprises an adhesion promoter, and
wherein the wear protection layer (3) comprises a mixture comprising a polymethyl methacrylate and polyorganosiloxane,
**characterized in that**
the polyorganosiloxane has a number average molecular weight, measured as described in the description, in a range of greater than or equal to 50 kDa to less than or equal to 700 kDa, preferably of greater than or equal to 100 kDa to less than or equal to 500 kDa, further preferably greater than or equal to 150 kDa to less than or equal to 300 kDa.

2. Wear protection film (1) according to claim 1, **characterized in that** the thermoplastic is selected from the group consisting of polypropylene, polyvinyl chloride, polyethylene, copolymers thereof and mixtures thereof, wherein the thermoplastic is in particular polypropylene.

3. Wear protection film (1) according to claim 1 or 2, **characterized in that** the adhesion promoter is a polyolefin copolymer, preferably a polyolefin graft copolymer, particularly preferably a polypropylene graft copolymer, in particular a maleic acid anhydride-modified polypropylene graft copolymer.

4. Wear protection film (1) according to claim 3, **characterized in that** the maleic acid anhydride-modified polypropylene graft copolymer has a maleic acid content in a range from greater than or equal to 0.1 wt.-% to less than or equal to 5 wt.-%, based on the maleic acid anhydride-modified polypropylene graft copolymer, preferably from greater than or equal to 0.5 wt.-% to less than or equal to 1.5 wt.-%.

5. Wear protection film (1) according to any one of claims 1 to 4, **characterized in that** the polymethyl methacrylate comprises an impact modifier, in particular in an amount in a range of greater than or equal to 0.1 wt.-% to less than or equal to 5 wt.-%, based on the polymethyl methacrylate, preferably from greater than or equal to 0.5 wt.-% to less than or equal to 5 wt.-%.

6. Wear protection film (1) according to any one of claims 1 to 5, **characterized in that** the polyorganosiloxane is a polydimethylsiloxane.

7. Wear protection film (1) according to any one of claims 1 to 6, **characterized in that** the mixture comprising polymethyl methacrylate and polyorganosiloxane comprises polymethyl methacrylate in a range from greater than or equal to 90 wt.-% to less than 100 wt.-%, based on the mixture, preferably greater than or equal to 95 wt.-% to less than or equal to 99.9 wt.-%, more preferably greater than or equal to 98 wt.-% to less than or equal to 99.5 wt.-%, particularly preferably greater than or equal to 98.5 wt.-% to less than or equal to 99 wt.-%,
wherein the mixture comprising polymethyl methacrylate and polyorganosiloxane comprises polyorganosiloxane in a range of greater than 0 wt.-% to less than or equal to 10 wt.-%, based on the mixture, preferably greater than or equal to 0.1 wt.-% to less than or equal to 5 wt.-%, further preferably greater than or equal to 0.5 wt.-% to less than or equal to 2 wt.-%, particularly preferably greater than or equal to 1 wt.-% to less than or equal to 1.5 wt.-%.

8. Decorative panel (5), **characterized in that** the decorative panel (5) comprises a carrier plate (6), at least one decorative layer (7) and a wear protection film (1 ) according to any one of claims 1 to 7, wherein the wear protection film (1) is aligned on the carrier film side with respect to the carrier plate (6), and wherein the decorative layer (7) and a laminating adhesive layer (8) are arranged between the carrier plate (6) and the thermoplastic carrier film (2).

9. Decorative panel (5) according to claim 8, **characterized in that** at least one laminating adhesive layer (8) is arranged between the decorative layer (7) and the wear protection film (1).

10. Decorative panel (5) according to claim 8 or 9, **characterized in that** the decorative layer (7) is arranged on the carrier plate (6) and/or the thermoplastic carrier film (2).

11. Decorative panel (5) according to claim 9 or 10, **characterized in that** the laminating adhesive layer (8) comprises a laminating adhesive selected from the group consisting of hot melt adhesive and UV-curable adhesive.

12. Decorative panel according to any one of claims 8 to 11, **characterized in that** the carrier plate (6) comprises polypropylene, polyethylene, polyvinyl chloride, copolymers thereof and mixtures thereof.

13. Method for producing a wear protection film (1) according to any one of claims 1 to 7, wherein a thermoplastic is coextruded, extrusion-coated and/or laminated, preferably coextruded into a thermoplastic carrier film (2), an adhesion promoter is coextruded, extrusion-coated and/or laminated, preferably coextruded into an adhesion promoter layer (4) and a mixture comprising polymethyl methacrylate and polyorganosiloxane is coextruded extrusion-coated and/or laminated, preferably coextruded, into a wear protection layer (3) while forming the wear protection film (1),
**characterized in that**
the polyorganosiloxane has a number average molecular weight, measured as described in the description, in a range of greater than or equal to 50 kDa to less than or equal to 700 kDa, preferably of greater than or equal to 100 kDa to less than or equal to 500 kDa, further preferably greater than or equal to 150 kDa to less than or equal to 300 kDa.

14. Method for producing a decorative panel (5) according to any one of claims 8 to 12, comprising at least the method steps:
a) providing a wear protection film (1) according to any one of claims 1 to 8;
b) providing a carrier plate (6);
c) applying a decorative layer (7) onto the carrier plate (6) and/or the thermoplastic carrier film (2) of the wear protection film (1);
d) optionally applying a laminating adhesive layer (8) onto the carrier plate (6) and/or the thermoplastic carrier film (2) of the wear protection film (1); and
e) bonding the wear protection film (1) and the carrier plate (6) while forming the decorative panel (1).

## Revendications

1. Film de protection anti-usure (1) **caractérisé en ce que** le film de protection anti-usure (1) présente un film support (2) thermoplastique et une couche de protection anti-usure (3) disposée sur le film support (2) thermoplastique, dans lequel une couche de promoteur d'adhésion (4) est disposée au moins partiellement entre le film support (2) thermoplastique et la couche de protection anti-usure (3),
dans lequel le film support (2) thermoplastique présente une matière plastique thermoplastique,
dans lequel la couche de promoteur d'adhésion (4) présente un promoteur d'adhésion, e
dans lequel la couche de protection anti-usure (3) présente un mélange présentant un poly méthyl méthacrylate et un poly organo siloxane, **caractérisé en ce que** le poly organo siloxane a un poids moléculaire moyen en nombre, mesuré comme décrit dans la description, dans une plage égale ou supérieure à 50 kDa à inférieure ou égale à 700 kDa, de préférence égale ou supérieure à 100 kDa à inférieure ou égale à 500 kDa, plus préférentiellement égale ou supérieure à 150 kDa à inférieure ou égale à 300 kDa.

2. Film de protection anti-usure (1) selon la revendication 1, **caractérisé en ce que** la matière plastique thermoplastique est choisie dans le groupe constitué du polypropylène, du chlorure de polyvinyle, du polyéthylène, de copolymères de ceux-ci et de mélanges de ceux-ci, où la matière plastique thermoplastique est en particulier du polypropylène.

3. Film de protection anti-usure (1) selon l'une des revendications 1 et 2, **caractérisé en ce que** le promoteur d'adhésion est un copolymère de polyoléfines, de préférence un copolymère greffé de polyoléfine, de manière particulièrement préférée un copolymère greffé de polypropylène, en particulier un copolymère greffé de propylène modifié à l'anhydride d'acide maléique.

4. Film de protection anti-usure (1) selon la revendication 3, **caractérisé en ce que** le copolymère greffé de polypropylène modifié à l'anhydride d'acide maléique présente une proportion d'acide maléique dans une plage égale ou supérieure à 0,1 % en poids à inférieure ou égale à 5 % en poids, par rapport au copolymère greffé de polypropylène modifié à l'anhydride d'acide maléique, de préférence égale ou supérieure à 0,5 % en poids à inférieure ou égale à 1,5 % en poids.

5. Film de protection anti-usure (1) selon l'une des revendications 1 à 4, **caractérisé en ce que** le poly méthyl méthacrylate présente une modification de la résistance aux chocs, en particulier, d'une valeur dans une plage égale ou supérieure ou supérieure ou égale à 0,1 % en poids à inférieure ou égale à 5 % en poids, par rapport au poly méthyl méthacrylate, de préférence, supérieure ou égale à 0,5 % en poids à inférieure ou égale à 5 % en poids.

6. Film de protection anti-usure (1) selon l'une des revendications 1 à 5, **caractérisé en ce que** le poly organo siloxane est un poly diméthyl siloxane.

7. Film de protection anti-usure (1) selon l'une des revendications 1 à 6, **caractérisé en ce que** le mélange présentant du poly méthyl méthacrylate et du poly organo siloxane présente du poly méthyl méthacrylate dans une plage égale ou supérieure à 90 % en poids à inférieure à 100 % en poids par rapport au mélange, de préférence égale ou supérieure à 95 % en poids à inférieure ou égale à 99,9 % en poids, plus préférentiellement égale ou supérieure à 98 % en poids à inférieure ou égale à 99,5 % en poids, de manière particulièrement préférée égale ou supérieure à 98,5 % en poids à inférieure ou égale à 99 % en poids,
dans lequel le mélange présentant du poly méthyl méthacrylate et du poly organo siloxane présente du poly organo siloxane dans une plage supérieure à 0 % en poids à inférieure ou égale à 10 % en poids par rapport au mélange, de préférence égale ou supérieure à 0,1 % en poids à inférieure ou égale à 5 % en poids, plus préférentiellement égale ou supérieure à 0,5 % en poids à inférieure ou égale à 2 % en poids, de manière particulièrement préférée égale ou supérieure à 1 % en poids à inférieure ou égale à 1,5 % en poids.

8. Panneau décoratif (5) **caractérisé en ce que** le panneau décoratif (5) présente une plaque support (6), au moins une couche de décor (7) et un film de protection anti-usure (1) selon l'une des revendications 1 à 8, où le film de protection anti-usure (1) est placé du coté film support par rapport à la plaque support (6) et où la couche de décor (7) et la couche d'adhésif de masquage (8) sont disposées entre la plaque support (6) et le film support (2) thermoplastique.

9. Panneau décoratif (5) selon la revendication 8, **caractérisé en ce qu'au** moins une couche d'adhésif de masquage (8) est disposée entre la couche de décor (7) et le film de protection anti-usure (1).

10. Panneau décoratif (5) selon la revendication 8 ou la revendication 9, **caractérisé en ce que** la couche de décor (7) est disposée sur la plaque support (6) et/ou le film support (2) thermoplastique.

11. Panneau décoratif (5) selon l'une des revendications 9 ou 10, **caractérisé en ce que** la couche d'adhésif de masquage (8) présente un adhésif de masquage choisi dans le groupe constitué d'un adhésif fusible et d'un adhésif durcissable aux UV.

12. Panneau décoratif (5) selon l'une des revendications 8 à 11, **caractérisé en ce que** la plaque support (6) présente du polypropylène, du polyéthylène, du chlorure de polyvinyle, des copolymères de ceux-ci et des mélanges de ceux-ci.

13. Procédé de fabrication d'un film de protection anti-usure (1) selon l'une des revendications 1 à 7, dans lequel une matière plastique thermoplastique, pour former un film support (2) thermoplastique, un promoteur d'adhésion, pour former une couche de promoteur d'adhésion (4), et un mélange présentant du poly méthyl méthacrylate et du poly organo siloxane, pour former une couche de protection anti-usure (3) moyennant la formation du film de protection anti-usure, sont co-extrudés, revêtus par coextrusion et/ou laminés, de préférence co-extrudés, **caractérisé en ce que** le poly organo siloxane a un poids moléculaire moyen en nombre, mesuré comme décrit dans la description, dans une plage égale ou supérieure à 50 kDa à inférieure ou égale à 700 kDa, de préférence égale ou supérieure à 100 kDa à inférieure ou égale à 500 kDa, plus préférentiellement égale ou supérieure à 150 kDa à inférieure ou égale à 300 kDa.

14. Procédé de fabrication d'un panneau décoratif (5) selon l'une des revendications 8 à 12, présentant au moins les étapes de procédé :
a) de mise au point d'un film de protection anti-usure (1) selon l'une des revendications 1 à 8,
b) de mise au point d'une plaque support (6),
c) d'application d'une couche de décor (7) sur la plaque support (6) et/ou le film support (2) thermoplastique du film de protection anti-usure (1),
d) éventuellement, d'application d'une couche d'adhésif de masquage (8) sur la plaque support (6) et/ou le film support (2) thermoplastique du film de protection anti-usure (1),
e) de liaison du film de protection anti-usure (1) et de la plaque support (6) moyennant l'emploi du panneau décoratif (1).
